Europäisches Patentamt

European Patent Office

Office européen des brevets

(11) Veröffentlichungsnummer: **0 224 637**
**A1**

## (12) EUROPÄISCHE PATENTANMELDUNG

(21) Anmeldenummer: 86106924.3

(22) Anmeldetag: 22.05.86

(51) Int. Cl.⁴: **A61C 5/06**

(30) Priorität: 21.10.85 DE 8529805 U

(43) Veröffentlichungstag der Anmeldung:
10.06.87 Patentblatt 87/24

(84) Benannte Vertragsstaaten:
**CH DE FR GB IT LI**

(71) Anmelder: **Mühlbauer, Ernst**
**Fangdieckstrasse 61**
**D-2000 Hamburg 53(DE)**

(72) Erfinder: **Mühlbauer, Ernst**
**Fangdieckstrasse 61**
**D-2000 Hamburg 53(DE)**

(74) Vertreter: **Glawe, Delfs, Moll & Partner**
**Patentanwälte**
**Postfach 26 01 62 Liebherrstrasse 20**
**D-8000 München 26(DE)**

(54) Vorrichtung zum dosierten Ausbringen von Dentalmassen.

(57) Vorrichtung zum dosierten Ausbringen von Dentalmasse mit einem einen für mehrfachen Gebrauch bemessenen Zylinderraum (4) bildenden Spritzenkörper (1), der am einen Ende des Zylinderraums eine Düse (2) aufweist und zur Begrenzung des anderen Endes des Zylinderraums einen unter Vorspannung an der Zylinderraumwandung anliegenden Kolben (5) umfaßt, der darin mittels einer aus dem Spritzenkörper herausragenden und mit einer Handhabe (7) verbundenen Kolbenstange (6) verschiebbar ist. Zur Erleichterung der Dosierung ist der Düsenöffnung ein fest mit dem Spritzenkörper - (1) verbundener Strömungsbegrenzer (8) vorgeschaltet, der als Drossel ausgebildet sein kann.

# Fig.1

EP 0 224 637 A1

## Vorrichtung zum dosierten Ausbringen von Dentalmassen

Die Erfindung bezieht sich auf eine Vorrichtung zum dosierten Ausbringen von Dentalmasse mit einem einen für mehrfachen Gebrauch bemessenen Zylinderraum bildenden Spritzenkörper, der am einen Ende des Zylinderraums eine Düse aufweist und zur Begrenzung des anderen Endes des Zylinderraums einen unter Vorspannung an der Zylinderraumwandung anliegenden Kolben umfaßt, der darin mittels einer aus dem Spritzenkörper herausragenden und mit einer Handhabe verbundenen Kolbenstange verschiebbar ist.

Die Verwendung von Dentalmassen, die erst unter dem Einfluß ultravioletter Strahlung aushärten, gestattet die Verwendung von Applikationsspritzen, die für mehrfachen Gebrauch eine größere Menge der Dentalmasse enthalten. Der entsprechend großvolumige Zylinderraum der Spritze hat einen beträchtlichen Druchmesser, so daß für das Ausbringen einer Zahnfüllungsmenge nur ein geringer Kolbenweg zurückzulegen ist. Trotzdem muß eine genaue Dosierung möglich sein, unbeeinflußt von Zufälligkeiten. Diese können beispielsweise bestehen in der Haftreibung des Kolbens an den Wänden des Zylinderraums, deren Überwindung zum sprunghaften Ansteigen der austretenden Menge führen kann. Verunreinigungen können den Querchnitt der Düsenöffnung zeitweilig verringern und nach ihrer durch die Düsenströmung verursachten Entfernung gleichfalls einen Massenschwall nach sich ziehen. Wenn die Düse ein in den Düsenkörper eingestecktes Mundstück, kurz als Düsenröhrchen bezeichnet, enthält, das lediglich durch seine Reibung in der Einstecköffnung gehalten wird, kann ein zu hoher Ausbringdruck das Düsenröhrchen aus der Einstecköffnung heraustreiben, wodurch der Drosselwiderstand des Düsenröhrchens entfällt und eine größere Menge Dentalmasse sich ungezielt in den Mund des Patienten ergießen kann. Aus diesem Grund verwendet man Vorrichtungen der eingangs genannten Art ausschließlich in Verbindung mit besonderen Mitteln, die eine behutsame und genau bemessene Verschiebung des Kolbens gestatten, nämlich im allgemeinen mit Gewindespindeln.(DE-A 32 40 785, DE-A 32 12 187, DE-U 77 23 645, EP-A 00 90 961, US-A 35 21 356, EP-A 01 41 083).

Ferner sind ähnliche Vorrichtungen bekannt, die lediglich zur Aufnahme einer einzigen Füllungsportion bestimmt sind. Bei diesen können störende Einflüsse weniger leicht auf treten, weil zum einen der Kolbendurchmesser im Hinblick auf das geringere Füllvolumen geringer und der Vorschub weg daher entsprechend größer ist und zum anderen Strömungsstörungen in den jeweils jungfräulichen Düsenquerschnitten nicht zu befürchten sind (DE-U 78 37 177, DE-C 25 28 116, DE-U 83 23 958, DE-A 29 03 331, DE-B 19 04 963, US-A 39 00 954). Trotzdem zieht man es auch bei diesen Vorrichtungen vor, ein besonderes Werkzeug zum Vorschieben des Kolbens zu verwenden, das eine Bewegungsübersetzung beinhaltet und dadurch den Verschiebeweg vergrößert und die aufzuwendende Kraft verringert (US-PS 4 198 756, US-PS 4 330 280).

Bei Injektionsspritzen ist es bekannt (FR-A 23 80 031), die Öffnung im Ende des Spritzenkörpers als dünne Kapillare auszubilden, die verhindern soll, daß sich erhebliche Teile der im Spritzenkörper enthaltenen Suspension darin absetzen und verfestigen, wenn der Spritzenkörper mit der Öffnung nach unten gelagert wird. Einerseits ist dies ein Problem, das nur bei Injektionsspritzen nicht aber bei Vorrichtungen zum Ausbringen von Dentalmassen auftreten kann, und andererseits tritt bei Injektionsspritzen nicht das oben geschilderte Dosierungsproblem auf. Die bekannte Injektionsspritze konnte daher keine Hinweise für die Gestaltung von Applikationsvorrichtungen für Dentalmassen im Hinblick auf die Dosierung solcher Massen geben.

Der Erfindung liegt die Aufgabe zugrunde, eine Applikationsspritze der eingangs genannten Art zu - schaffen, die trotz ihrer Eignung für mehrmaligen Gebrauch und entsprechend großvolumiger Ausführung die genannten Gefahren ohne aufwendige Dosierhilfsmittel vermeidet.

Die erfindungsgemäße Lösung besteht darin, daß der Düsenöffnung ein fest mit dem Spritzenkörper verbundener Strömungsbegrenzer vorgeschaltet ist,
Die Funktion des Strömungsbegrenzers besteht darin, daß der Ausgabestrom maßgeblich durch ihn bestimmt wird, wodurch die Bedeutung anderer Einflußgrößen entsprechend ausgeschaltet oder vermindert wird. Wenn beispielsweise aufgrund einer Ungeschicklichkeit oder der Überwindung der Haftreibung des Kolbens im Zylinderraum der darin herrschende Ausbringdruck plötzlich ansteigt, so kann dies infolge der Begrenzung der austretenden Strömung nicht zu einem unerwünschten Schwall führen. Dasselbe gilt, wenn der Strömungswiderstand der Düse plötzlich verringert wird, beispielsweise infolge des Austretens einer Verunreinigung oder des Herausfallens des Düsenröhrchens aus der Einstecköffnung. Der letztere Fall, der im allgemeinen nur dann auftreten kann, wenn ein unsachgemäß großer Druck auf den Kolben ausgeübt wird, wird durch die Erfindung im übrigen praktisch ausgeschlossen, weil der größte Teil des durch die hohe Kolbenkraft verursachten Drucks im Zylinderraum am Strömungsbegrenzer abfällt und dadurch die auf das Düsenröhrchen ausgeübte Kraft entsprechend geringer ist.

In der Technik sind Strömungsbegrenzer verschiedener Art bekannt, beispielsweise Verschlußorgane, die durch den Differenzdruck des Strömungsmediums gegen Federkraft den Strömungsquerschnitt verengen und dadurch die Strömungsmenge weitgehend unabhängig vom Differenzdruck konstant halten; sie bedürfen daher hier keiner näheren Beschreibung (US-A 2 775 984).

Im allgemeinen genügt aber eine einfache Drossel konstanten Querschnitts, deren Wirkung darauf beruht, daß an ihr ein beträchtlicher Druckabfall stattfindet, so daß Änderungen des einwirkenden Drucks, beispielsweise infolge der Überwindung von Haftreibung am Kolben, oder plötzliche Änderungen des Strömungswiderstands in den übrigen Düsenquerschnitten sich entsprechend geringer auswirken.

Das Merkmal, daß der Strömungsbegrenzer bzw. die Drossel fest verbunden ist mit dem Spritzenkörper, besagt nicht, daß er einstückig mit dem Spritzenkörper ausgebildet sein muß, obwohl dies möglich ist. Er kann auch mit einem auswechselbaren Teil der Düse verbunden sein, sofern dieser mit dem Spritzenkörper zur Benutzung fest verbunden wird und nicht wie das erwähnte Düsenröhrchen unter ungünstigen Umständen herausfallen kann. Steckverbindungen sollen dafür nicht unter allen Umständen ausgeschlossen sein, sofern sie so fest ausgeführt sind, daß das erwähnte Herausfallen nicht stattfinden kann.

Applikationsspritzen, die mit einem Düsenröhrchen zu kombinieren sind, konnten bislang im allgemeinen nicht ohne Düsenröhrchen bzw. nicht mit einem Düsenröhrchen anderen Querschnitts verwendet werden, weil dessen Strömungswiderstand die austretende Menge in Grenzen hielt. Die Erfindung ermöglicht die Verwendung solcher Spritzen ohne Applikationsröhrchen oder mit einem Röhrchen größeren Querschnitts, weil die bei einer bestimmten Kraftaufwendung austretende Menge vom Querschnitt des Düsenröhrchens weitgehend unabhängig ist.

Das Düsenröhrchen hat zweckmäßigerweise konstanten Querschnitt über seine ganze Länge, so daß es ein einfacher Abschnitt eines mit unendlicher Länge extrudierten Rohrs sein kann. Es kann aber an seinem freien Ende, das nicht in die Mündungsöffnung des Spritzenkörpers eingesteckt wird, auch in besonderer Weise zur Erleichterung des Applizierens geformt sein, beispielsweise mit einer Verteilvorrichtung in der Art eines Pinsels.

Die Erfindung wird im folgenden näher unter Bezugnahme auf die Zeichnung erläutert, die eine erfindungsgemäße Applikationsspritze veranschaulicht. Darin zeigen:

Fig. 1 einen Längsschnitt durch die Spritze,

Fig. 2 einen Längsschnitt durch das Drosselorgan in vergrößerter Darstellung

Fig. 3 ein Düsenmundstück und Düsenröhrchen mit Verteilvorrichtung

Der hohlzylindrische Spritzenkörper 1 besitzt am vorderen Ende ein Düsenmundstück 2 mit sich nach vorne konisch schwach erweiternder Bohrung, in die ein Düsenröhrchen 3 klemmend eingesetzt ist. In dem Zylinderraum 4 ist ein Kolben 5 an der Kolbenstange 6 verschiebbar, die einen Betätigungsgriff 7 am kolbenfernen Ende trägt.

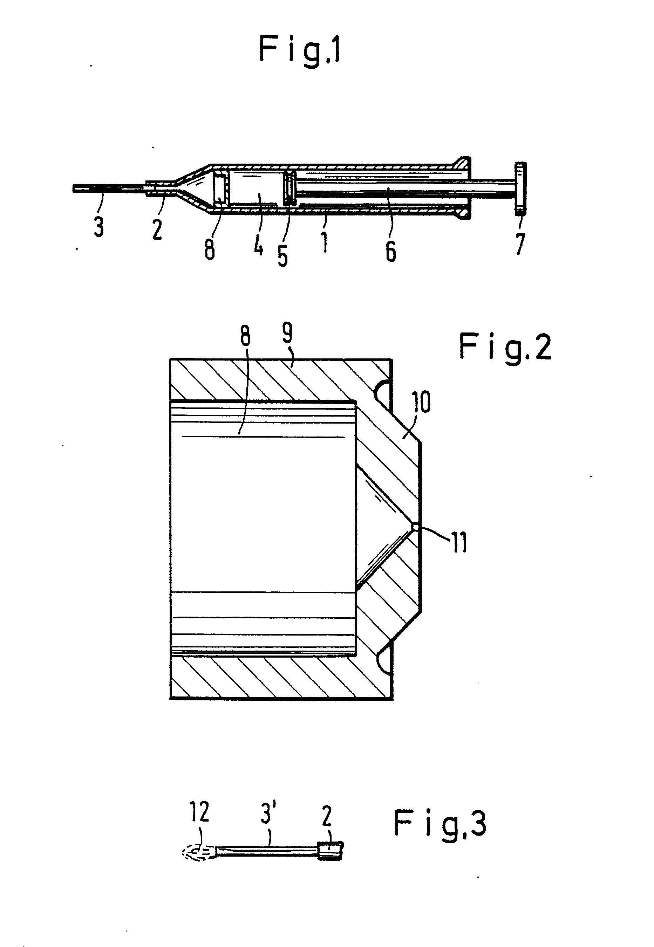

Dem Düsenmundstück 2 ist innerhalb des Zylinderraums 4 das Drosselorgan 8 vorgeschaltet, das in Fig. 2 in vergrößertem Maßstab veranschaulicht ist. Es besitzt eine äußere, zylindrische Wandung 9, die passend zum Innendurchmesser des Zylinderraums 4 ausgebildet ist, und eine Stirnfläche 10, die die Drosselbohrung 11 enthält. Die Stirnfläche 10 verläuft (im Längsschnitt) von ihrer Verbindungsstelle mit der Wand 9 zur Düsenöffnung 11 im Mittel ein wenig konisch. Von rechts her einwirkender Druck neigt daher dazu, sie nach links zu drücken, wodurch eine radial nach innen gerichtete Kraftkomponente erzeugt wird, die zur Verringerung des Durchmessers der Drosselöffnung 11 führt. Wenn das Drosselorgan mit der Stirnwand 10 dem Kolben 5 entgegen eingebaut wird, erhält man somit eine Anordnung, in welcher der Drosselwiderstand mit dem an der Drosselöffnung wirksamen Druckdifferenz anwächst. Wünscht man diese Wirkung nicht, so kann man das Drosselorgan 8 entgegengesetzt gerichtet einbauen.

Bei einem bewährten Ausführungsbeispiel, bei welchem das Düsenröhrchen 3 einen Innendurchmesser von 0,5 mm und seine Einstecköffnung im Düsenmundstück 2 einen mittleren Druchmesser von etwa 1,8 mm aufwies, besaß die Drosselbohrung 11 einen Durchmesser von 0,2 mm bei sehr geringer Länge.

Zweckmäßigerweise ist die Drosselöffnung so bemessen, daß ihr Druckabfall bei laminarer Druchströmung größer ist als der der Mundstücksbohrung und vorzugsweise nicht wesentlich geringer als derjenige des Düsenröhrchens.

Im dargestellten Beispiel ist das Drosselelement insofern fest mit dem Düsenkörper 1 verbunden, als es an dem durch die konische Verengung des Zylinderraums gebildeten Anschlag anliegt und daher nicht unter dem Einfluß der Kolbenkraft weiter nach links ausweichen kann. Nur in dieser Richtung ist die feste Verbindung des Strömungsbegrenzers mit dem Spritzenkörper von Interesse.

In der Ausführung gemäß Fig. 3 ist das Düsenröhrchen 3' am freien Ende mit einem Pinsel 12 versehen, der den Auftrag der Dentalmasse erleichtert, die durch das Röhrchen 3' in das hintere Ende des Pinsels entritt. Der Pinsel kann einstückig mit dem Röhrchen 3' hergestellt sein, indem dieses beispielsweise zur Bildung von länglichen, dünnen, parallelen Teilen von der Art von Pinselborsten am Ende geschlitzt ist. Er kann aber auch ein gesonderter, mit dem Röhrchen verbundener Teil sein.

## Ansprüche

1. Vorrichtung zum dosierten Ausbringen von Dentalmasse mit einem einen für mehrfachen Gebrauch bemessenen Zylinderraum bildenden Spritzenkörper, der am einen Ende des Zylinderraums eine Düse aufweist und zur Begrenzung des anderen Endes des Zylinderraums einen unter Vorspannung an der Zylinderraumwandung anliegenden Kolben umfaßt, der darin mittels einer aus dem Spritzenkörper herausragenden und mit einer Handhabe verbundenen Kolbenstange verschiebbar ist, dadurch gekennzeichnet, daß der Düsenöffnung ein fest mit dem Spritzenkörper verbundener Strömungsbegrenzer vorgeschaltet ist.

2. Vorrichtung nach Anspruch 1, dadurch gekennzeichnet, daß der Strömungsbegrenzer eine Drossel ist.

3. Vorrichtung nach Anspruch 1 oder 2, dadurch gekennzeichnet, daß die Düse ein in eine Mündungsöffnung des Spritzenkörpers einsteckbares Düsenröhrchen (3) umfaßt.

4. Vorrichtung nach Anspruch 3, dadurch gekennzeichnet, daß am freien Ende des Düsenröhrchens eine Verteilvorrichtung von der Art eines Pinsels angeordnet ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 090 961 (ESPE FABRIK PHARMAZEUTISCHER PRÄPARATE GmbH) * Seite 5, Zeilen 15-18; Patentansprüche 1a,1b,1d,17; Figur 2 * | 1,2 | A 61 C 5/06 |
| | --- | | |
| A | DE-A- 68 314 (HIRSCH) * Patentansprüche; Figuren 1,2 * | 1-2 | |
| | --- | | |
| Y,D | US-A-2 775 984 (DAHL) * Spalte 1, Zeilen 22-29; Spalte 2, Zeilen 18-22; Figuren 1,2 * | 1,2 | |
| | --- | | |
| A | FR-A-2 380 031 (SCHERICO LTD) * Figur 1; Seite 1, Zeile 38 - Seite 2, Zeile 10; Seite 1, Zeilen 13-15 * | 1-3 | |
| | | | RECHERCHIERTE SACHGEBIETE (Int. Cl.4) |
| A,D | US-A-3 900 954 (DRAGAN) * Spalte 4, Zeilen 17-19; Figur 3 * | 1-3 | A 61 C A 61 M |
| | --- | | |
| A | CH-A- 442 621 (CHIRANA-ZAVODY) * Spalte 2, Zeilen 18-22; Figur 1 * | 1-2 | |
| | --- | | |
| A,D | US-A-3 521 356 (NEWMAN) * Spalte 5, Zeilen 38-41; Figur 5 * | 3 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 03-02-1987 | RAKOWICZ,J.M. |

| EINSCHLÄGIGE DOKUMENTE | | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | US-A-1 573 224 (CONDIT) <br> * Seite 2, Zeilen 31-39; Figuren 2,6 * | 4 | |
| | ----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 03-02-1987 | RAKOWICZ,J.M. |